# EUROPEAN PATENT APPLICATION

(11) **EP 4 775 424 A1**
(43) Date of publication of application: **15.07.2026**
(21) Application number: 24861815.9
(22) Date of filing: 20.08.2024
(51) Int. Cl.: B60K 17/08, B60K 7/00, F16H 1/32

(54) **WHEEL SIDE DRIVING ASSEMBLY AND ASSEMBLING METHOD THEREFOR**

(30) Priority: 08.09.2023 CN 202311162619; 08.09.2023 CN 202322451740 U; 08.09.2023 CN 202322447604 U; 08.09.2023 CN 202322457281 U
(71) Applicant: Zhejiang Pangood Power Technology Co., Ltd., Jinhua, Zhejiang 321109 (CN)
(72) Inventor: ZHAO, Yutao, Jinhua, Zhejiang 321109 (CN); HAN, Jun, Jinhua, Zhejiang 321109 (CN); YU, Hebo, Jinhua, Zhejiang 321109 (CN); SUN, Lifeng, Jinhua, Zhejiang 321109 (CN); TAO, Qianwen, Jinhua, Zhejiang 321109 (CN)
(74) Representative: advotec.
(86) International application number: PCT/CN2024/113235
(87) International publication number: WO 2025/050971

(57) **Abstract**

The present invention provides a wheel side driving assembly and an assembling method. The wheel side driving assembly comprises a supporting arm, a motor, a first-stage decelerator, and a second-stage decelerator; the supporting arm comprises a first surface and a second surface which are opposite, and an arm body connected between the first surface and the second surface; the motor is connected to the first surface of the supporting arm; the first-stage decelerator is located in the arm body; the second-stage decelerator is located in the arm body; the motor, the first-stage decelerator, and the second-stage decelerator are sequentially transmittingly connected; and the second-stage decelerator is located between the first-stage decelerator and the motor. The second-stage decelerator achieves power output by means of a second-stage planet carrier, the structure is more compact, and the overall axial size is shortened.

## Description

### FIELD

The present application relates to the technical field of wheel-side drive, and in particular, to a wheel-side driving assembly and an assembling method therefor.

### BACKGROUND

Wheel-side drive is a drive mode for pure electric vehicles, which has the advantages such as a short power transmission route, flexible layout and a low vehicle floor. In a conventional wheel-side drive electric vehicle structure, a motor is typically connected to a half shaft through a reduction gearbox, and the power transmission sequence is as follows: the motor decelerates through the reduction gearbox and transmits power to the half shaft of a rear axle to drive a vehicle.

For example, a driving device disclosed in publication number CN209351248U includes a wheel hub, a support arm, a reduction gearbox and a motor. A first-stage reduction mechanism and a second-stage reduction mechanism are provided in the reduction gearbox, that is, the motor transmits power to the wheel hub sequentially through the first-stage reduction mechanism and the second-stage reduction mechanism. The wheel hub, the support arm, the reduction gearbox and the motor are connected axially in sequence, so that the overall axial dimension is large, and the occupied space is large.

The function of a reducer is to improve a driving force of a vehicle to meet or optimize torque matching of a whole transmission system. For example, a wheel-side reducer disclosed in the publication number CN110671472A includes a box body, and a first-stage reduction mechanism and a second-stage reduction mechanism arranged in the box body. The first-stage reduction mechanism includes a first-stage planet gear, the second-stage reduction mechanism includes a second-stage planet gear, and the first-stage planet gear and the second-stage planet gear are integrated together. During assembly, the first-stage planet gear and the second-stage planet gear are required to be assembled into the box body one by one, which increases the assembly difficulty.

For example, in a wheel-side drive device disclosed in the publication number CN208439060U, a motor and a support arm are arranged side by side, and jointly connected to the same side of a reduction gearbox, which ensures a small axial dimension, but increases the overall profile area. In addition, an elastic element, a damping element and the like need to be mounted to the support arm and are arranged at a contour edge of the reduction gearbox, thus limiting the side-by-side arrangement of the motor and the support arm.

### SUMMARY

In view of this, an object of the present application is to provide a wheel-side driving assembly with compact structure and small occupied space.

According to an object of the present application, a wheel-side driving assembly is provided , including:
a support arm having a first surface and a second surface opposite to each other, and an arm body connected between the first surface and the second surface;
a motor connected to the first surface of the support arm;
a first-stage reduction mechanism located inside the arm body; and
a second-stage reduction mechanism located inside the arm body, where the motor, the first-stage reduction mechanism and the second-stage reduction mechanism are sequentially connected in a transmission manner, the second-stage reduction mechanism is located between the first-stage reduction mechanism and the motor, and the second-stage reduction mechanism outputs power through a second-stage planet carrier.

In a preferred embodiment, the first-stage reduction mechanism includes:
a first-stage sun gear connected to the motor;
a first-stage planet carrier sleeved outside the first-stage sun gear, where a right side of the first-stage planet carrier is connected to a second-stage sun gear of the second-stage reduction mechanism;
a first-stage planet gear rotatably arranged on the first-stage planet carrier and meshed with the first-stage sun gear; and
a first-stage ring gear arranged around an outer periphery of the first-stage planet carrier and meshed with the first-stage planet gear.

In a preferred embodiment, the first-stage planet carrier includes:
a first-stage left side plate;
a first-stage right side plate, where the first-stage planet gear is rotatably arranged between the first-stage right side plate and the first-stage left side plate;
a first-stage right pipe connected to an inner peripheral portion of the first-stage right side plate, where the second-stage sun gear of the second-stage reduction mechanism is provided on the first-stage right pipe and meshed with the second-stage planet gear; and
a first-stage left pipe connected to an inner peripheral portion of the first-stage left side plate, where a bearing is arranged between the first-stage left pipe and a second-stage second carrier body of the second-stage planet carrier, and a bearing is arranged between the first-stage right pipe and the second-stage left side plate.

In a preferred embodiment, the second-stage reduction mechanism includes:
a second-stage planet carrier, one end of which is connected to a half shaft, and the other end of which is rotatably connected to the motor;
a second-stage planet gear rotatably arranged on the second-stage planet carrier;
a second-stage ring gear arranged around an outer periphery of the second-stage planet carrier and fixed to an inner wall of the arm body, and meshed with the second-stage planet gear; and
a second-stage sun gear meshed with the second-stage planet gear.

In a preferred embodiment, the second-stage planet gear includes a second-stage first gear and a second-stage second gear that are axially and integrally connected, the second-stage first gear is meshed with the second-stage sun gear, the second-stage second gear is meshed with the second-stage ring gear, and a diameter of the second-stage first gear is larger than that of the first gear.

In a preferred embodiment, the second-stage planet carrier includes:
a second-stage first carrier body, where the second-stage planet gear is rotatably arranged on the second-stage first carrier body; and
a second-stage second carrier body, a left side of which is connected to a half shaft, a right side of which is connected to the second-stage first carrier body, where the first-stage ring gear is axially limited between the second-stage first carrier body and the second-stage second carrier body.

In a preferred embodiment, the second-stage first carrier body includes:
a second-stage left side plate;
a second-stage right side plate, where the second-stage planet gear is rotatably arranged between the second-stage right side plate and the second-stage left side plate;
a second-stage right pipe connected to an inner peripheral portion of the second-stage right side plate, where a bearing is arranged between the second-stage right pipe and the motor; and
a second-stage left pipe connected to an outer peripheral portion of the second-stage left side plate, where the first-stage reduction mechanism is located in the second-stage left pipe.

In a preferred embodiment, the second-stage second carrier body includes:
a second-stage second left pipe, where a bearing is arranged between the second-stage second left pipe and the support arm; and
a second-stage second disc connected to the second-stage second left pipe, where the first-stage ring gear is axially limited between the second-stage second disc and the second-stage left pipe.

In a preferred embodiment, the first-stage planet gear is arranged on the first-stage planet carrier through a first-stage gear shaft; the second-stage planet gear is arranged on the second-stage planet carrier through a second-stage gear shaft; the first-stage planet gear is located on an axial side of the second-stage planet gear, one side of the first-stage gear shaft facing the second-stage planet gear is provided with a first-stage oil passage which is communicated between the first-stage planet gear and the first-stage gear shaft, and one side of the second-stage gear shaft facing the first-stage planet gear is provided with a second-stage oil passage that is communicated between the second-stage planet gear and the second-stage gear shaft.

In a preferred embodiment, the wheel-side driving assembly further includes: a reduction shaft which is connected to a motor. The reduction shaft passes through the first-stage planet carrier and the second-stage planet carrier in sequence, the first-stage planet carrier and the second-stage planet carrier are rotatably connected to the reduction shaft, and the first-stage sun gear is connected to an outer wall of the reduction shaft.

In a preferred embodiment, the second-stage planet gear comprises a second-stage first gear and a second-stage second gear that are axially and integrally connected, the second-stage first gear is meshed with the second-stage sun gear, and the second-stage second gear is meshed with the second-stage ring gear.

In a preferred embodiment, the support arm includes a mounting seat, and the mounting seat includes:
a first housing;
a second housing, one side of which is connected to the first housing, and the other side of which is configured for connecting a driving device, where a circumferential dimension of the second housing is greater than that of the first housing;
where an interior of the first housing and an interior of the second housing are communicated and form a stepped hole which is configured for accommodating a reduction assembly; and
the first-stage reduction mechanism is arranged inside the first housing, and the second-stage reduction mechanism is arranged inside the second housing.

A method for assembling a wheel-side driving assembly, includes:
providing a support arm which has a first surface and a second surface opposite to each other, and an arm body connected between the first surface and the second surface;
connecting the second-stage reduction mechanism between the first-stage reduction mechanism and the motor; and
inserting the first-stage reduction mechanism and the second-stage reduction mechanism into the arm body from the first surface of the support arm, and connecting the motor to the first surface, where the second-stage reduction mechanism outputs power through a second-stage planet carrier.

Compared with the conventional technology, the technical solutions have the following advantages.

The support arm is provided with an assembly through hole, and the first-stage reduction mechanism and the second-stage reduction mechanism are arranged inside the arm body of the support arm, the space is fully utilized, the structure is more compact, the overall axial size is reduced, and the strength of the wheel-side driving assembly is also improved.

The first-stage reduction mechanism, the second-stage reduction mechanism and the motor are arranged in the axial direction based on their respective circumferential sizes, the first-stage reduction mechanism with a smaller circumferential size is arranged on the outer side, and the second-stage reduction mechanism with a larger circumferential size is arranged between the motor and the first-stage reduction mechanism, which avoids interference with an airbag or other components arranged at the contour edge of the support arm, so that the arrangement is novel, the mechanism space is fully utilized, and the occupied space is further reduced.

The first-stage reduction mechanism is located inside the second-stage reduction mechanism, so that the structure is compact and the occupied space is reduced. Moreover, the first-stage ring gear of the first-stage reduction mechanism is fixed to the second-stage planet carrier, that is, the first-stage ring gear rotates with the second-stage planet carrier, and the left side of the second-stage planet carrier is connected to a wheel hub through the half shaft, so that the rotation speed is actually reduced, and the service life of the bearings is further prolonged.

The first-stage reduction mechanism and the second-stage reduction mechanism are jointly arranged inside the support arm, that is, they share a common cavity. The first-stage planet gear and the second-stage planet gear can jointly stir lubricating oil in the support arm for integral lubrication. The first-stage planet gear can throw the lubricating oil onto the second-stage planet gear, thereby improving the lubrication effect and ensuring the operation reliability.

Moreover, the lubricating oil can enter the first-stage oil passage and the second-stage oil passage to lubricate the bearings between the first-stage planet gear and the first-stage connecting shaft, and between the second-stage planet gear and the second-stage connecting shaft, so as to further improve the lubrication effect.

The present application is further described below with reference to the attached drawings and embodiments.

### BRIEF DESCRIPTION OF THE DRAWINGS

FIG. 1 is a cross-sectional view of a wheel-side driving assembly according to the present application;
FIG. 2 is a partial cross-sectional view of a wheel-side driving assembly according to the present application;
FIG. 3 is a perspective view of a wheel-side driving assembly according to the present application;
FIG. 4 is a perspective view of a first-stage reduction mechanism according to the present application;
FIG. 5 is a cross-sectional view of a first-stage reduction mechanism according to the present application;
FIG. 6 is a perspective view of a second-stage reduction mechanism according to the present application;
FIG. 7 is a cross-sectional view of a second-stage reduction mechanism according to the present application;
FIG. 8 is a schematic view of a second-stage first carrier body in one direction according to the present application;
FIG. 9 is a schematic view of the second-stage first carrier body in another direction according to the present application;
FIG. 10 is a perspective view of a second-stage second carrier body of the present application;
FIG. 11 is a perspective view of a support arm according to the present application; and
FIG. 12 is a cross-sectional view of a support arm according to the present application.

### DETAILED DESCRIPTION OF THE EMBODIMENTS

The following description is used to disclose the present application and enable those skilled in the art to implement the present application. The preferred embodiments in the following description are only examples, and those skilled in the art can conceive of other obvious variations. The basic principles of the present application defined in the following description can be applied to other embodiments, variations, improvements, equivalents and other technical solutions without departing from the spirit and scope of the present application.

### First Embodiment

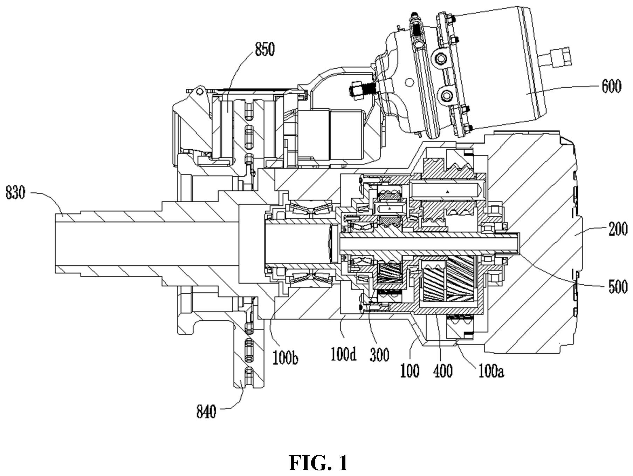

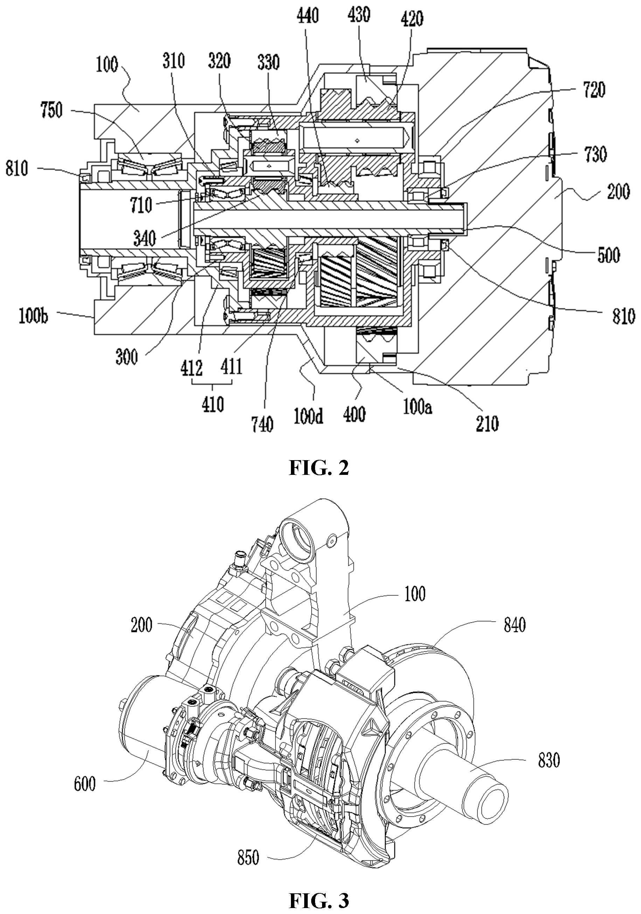

As shown in FIG. 1 and FIG. 2, a wheel-side driving assembly includes:
a support arm 100 having a first surface 100a and a second surface 100b opposite to each other, and an arm body 100d extending through a space between the first surface 100a and the second surface 100b;
a motor 200 connected to the first surface 100a of the support arm 100;
where the first-stage reduction mechanism 300 and the second-stage reduction mechanism 40 are located inside the arm body 100d, the motor 200, the first-stage reduction mechanism 300 and the second-stage reduction mechanism 400 are sequentially connected in a transmission manner, the second-stage reduction mechanism 400 is located between the first-stage reduction mechanism 300 and the motor 200, and the second-stage reduction mechanism 400 outputs power through a second-stage planet carrier 410.

By arranging the first-stage reduction mechanism 300 and the second-stage reduction mechanism 400 inside the arm body 100d of the support arm 100, the structure is compact and the overall axial dimension is reduced. Moreover, the first-stage reduction mechanism 300, the second-stage reduction mechanism 400 and the motor 200 are arranged axially based on their respective circumferential dimensions, and the first-stage reduction mechanism 300 with a smaller circumferential dimension is arranged on an outer side, and the second-stage reduction mechanism 400 with a larger circumferential dimension is arranged between the motor 200 and the first-stage reduction mechanism 300, so as to prevent the circumferential dimension from increasing and avoid interference with an airbag 600 and the like arranged on a contour edge of the support arm 100. This novel arrangement makes full use of space and further reduces the space occupied.

The first-stage reduction mechanism 300 and the second-stage reduction mechanism 400 are separate structures assembled to form a reduction structure. A first-stage planet carrier 310 is directly inserted into the second-stage planet carrier 410 and connected to a second-stage sun gear 440, so that the structure is simple and the assembly efficiency is improved.

As shown in FIG. 2, FIG. 11 and FIG. 12, the support arm 100 includes an upper arm 120 and a lower arm 130 that are respectively connected to upper and lower sides of an outer wall of the arm body 100d for connecting a suspension arm, a shock absorber or the airbag 600.

Two axial sides of the arm body 100d are the first surface 100a and the second surface 100b, respectively. The arm body 100d includes a first arm body 100d1 and a second arm body 100d2, the first arm body 100d1 is connected between the first surface 100a and the second arm body 100d2, and the second arm body 100d2 is connected between the first arm body 100d1 and the second surface 100d2.

A circumferential dimension of the first arm body 100d1 is larger than that of the second arm body 100d2, the second-stage reduction mechanism 400 is arranged in the first arm body 100d1, and the first-stage reduction mechanism 300 is arranged in the second arm body 100d2.

For a two-stage reduction mechanism, a circumferential dimension of a first-stage reducer is typically smaller than that of a second-stage reducer. If a motor, the first-stage reducer and the second-stage reducer are arranged sequentially according to a power transmission path, the circumferential dimension of the second-stage reducer at the very end is relatively large, which is not conducive to reducing the axial dimension of a wheel-side driving assembly. In the embodiment of the present application, the first-stage reduction mechanism 300 with a smaller circumferential dimension is arranged on the outer side, the second-stage reduction mechanism 400 with a larger circumferential dimension is arranged between the motor 200 and the first-stage reduction mechanism 300, and the two-stage reduction mechanism can be arranged deeply in the arm body 100d of the support arm 100, which effectively avoids the above defects and further reduces the axial size of the wheel-side driving assembly.

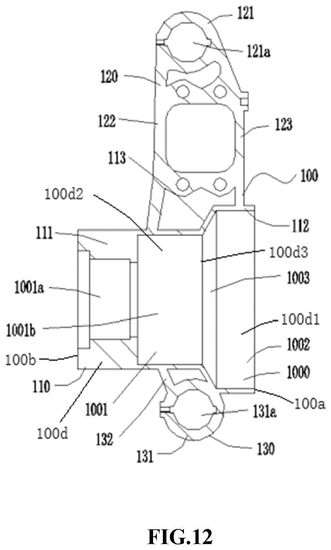

As shown in FIG. 12, the arm body 100d further includes an intermediate arm body 100d3 connected between the first arm body 100d1 and the second arm body 100d2. The first arm body 100d1 and the second arm body 100d2 are both cylindrical, and the intermediate arm body 100d3 is conical. Since the circumferential dimension of the first arm body 100d1 is larger than that of the second arm body 100d2, the arm body 100d has a stepped structure.

Referring to FIG. 1, the airbag 600 is obliquely arranged on an edge of a contour of the arm body 100d. A horizontal height of a right side of the airbag 600 is higher than that of a left side of the airbag 600. The arm body 100d does not affect the arrangement of the airbag 600, and provides enough internal space to accommodate the first-stage reduction mechanism 300 and the second-stage reduction mechanism 400. As shown in FIG. 2, the first-stage reduction mechanism 300 is arranged inside the second-stage planet carrier 410, which makes the structure compact. Moreover, a first-stage ring gear 300 of the first-stage reduction mechanism 300 is fixed to an inner wall of the second-stage planet carrier 410, which can prolong the service life of a bearing.

As shown in FIG. 2, the first-stage reduction mechanism 300 is located in the second arm body 100d2 of the support arm 100, and the first-stage reduction mechanism 300 is closer to the second surface 100b than the motor 200. The first-stage reduction mechanism 300 includes:
a first-stage sun gear 340 connected to the motor 200;
a first-stage planet carrier 310 sleeved outside the first-stage sun gear 340, where a right side of the first-stage planet carrier 310 is connected to the second-stage sun gear 440 of the second-stage reduction mechanism 400;
a first-stage planet gear 320 rotatably arranged on the first-stage planet carrier 310 and meshed with the first-stage sun gear 340, where the first-stage planet gear 320 may have a helical-tooth structure; and
a first-stage ring gear 330 arranged around an outer periphery of the first-stage planet carrier 310 and fixed to an inner wall of the second-stage planet carrier 410, where the first-stage ring gear 330 is meshed with the first-stage planet gear 320.

A motor shaft of the motor 200 is connected to a reduction shaft 500 that passes through the first-stage reduction mechanism 300 and the second-stage reduction mechanism 400. The first-stage sun gear 340 may be integrally or detachably connected to the reduction shaft 500, and the first-stage planet carrier 310 is rotatably arranged on an outer wall of the reduction shaft 500, so that the reduction shaft 500 drives the first-stage sun gear 340 to rotate. The first-stage planet gear 320 is engaged between the first-stage sun gear 340 and the first-stage ring gear 330. Both the first-stage sun gear 340 and the first-stage ring gear 330 rotate, the first-stage planet gear 320 is rotatably arranged on the first-stage planet carrier 310, so as to drive the first-stage planet carrier 310 to rotate, so that the first-stage planet carrier 310 transmits power through an output end on its right side.

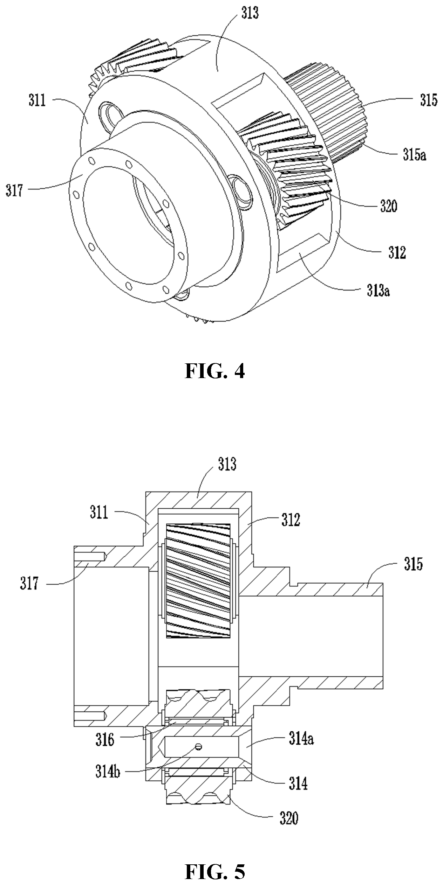

As shown in FIGS. 4 and 5, the first-stage planet carrier 310 includes a first-stage left side plate 311, a first-stage right side plate 312, a first-stage outer side plate 313 and a first-stage connecting shaft 314. The first-stage outer side plate 313 is connected to outer peripheral portions of the first-stage left side plate 311 and the first-stage right side plate 312, and the first-stage connecting shaft 314 is connected between the first-stage left side plate 311 and the first-stage right side plate 312. The number of the first-stage connecting shafts 314 is three, and the three first-stage connecting shafts 314 are spaced apart circumferentially. One first-stage planet gear 320 is sleeved on each first-stage connecting shaft 314, and the first-stage planet gear 320 are arranged between the first-stage left side plate 311 and the first-stage right side plate 312. The first-stage outer side plate 313 is provided with a first-stage opening 313a for the first-stage planet gear 320 to be exposed and meshed with the first-stage ring gear 330. A first-stage bearing 316 may be provided between the first-stage connecting shaft 314 and the first-stage planet gear 320.

Referring to FIG. 5, the first-stage connecting shaft 314 may be inserted into the first-stage left side plate 311 and the first-stage right side plate 312, and a right end face of the first-stage connecting shaft 314 may be exposed on the first-stage right side plate 312. A first-stage oil passage 314a may be formed in the right end face of the first-stage connecting shaft 314, and a first-stage hole 314b is formed in an inner wall of the first-stage oil passage 314a. Lubricating oil can enter the first-stage oil passage 314a from the right end face of the first-stage connecting shaft 314, and then pass through the first-stage hole 314b to lubricate the first-stage bearing 316 between the first-stage connecting shaft 314 and the first-stage planet gear 320, thereby improving lubricity and ensuring the reliability of operation.

The first-stage planet carrier 310 further includes a first-stage right pipe 315 which is connected to an inner peripheral portion of the first-stage right side plate 312 and configured as an output end of the first-stage reduction mechanism 300.

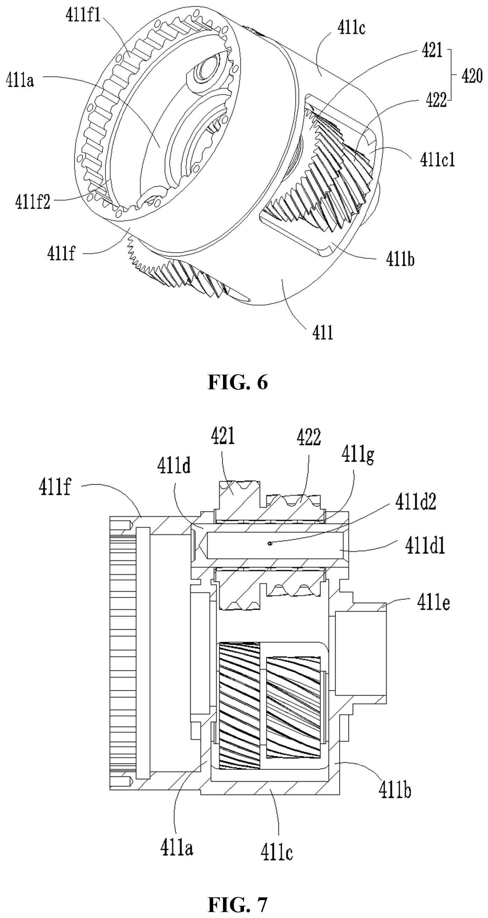

As shown in FIG. 2 and FIG. 7, the first-stage planet carrier 310 further includes a first-stage left pipe 317 connected to an inner peripheral portion of the first-stage left side plate 311, and the reduction shaft 500 passes through the first-stage right pipe 315 and the first-stage left pipe 317. A first bearing 710 may be arranged between the reduction shaft 500 and the first-stage left pipe 317. The first bearing 710 may be a double-row tapered roller bearing, allowing the first-stage planetary carrier 310 to rotate relative to the reduction shaft 500.

As shown in FIG. 2, the second-stage reduction mechanism 400 includes:
a second-stage planet carrier 410, one end of which is connected to a half shaft, and the other end of which is rotatably connected to the motor 200;
a second-stage planet gear 420 rotatably arranged on the second-stage planet carrier 410;
a second-stage ring gear 430, which is arranged around an outer periphery of the second-stage planet carrier 410 and fixed to an inner wall of the arm body 100d, and is meshed with the second-stage planet gear 420; and
a second-stage sun gear 440 connected to a right side of the first-stage planet carrier 310 of the first-stage reduction mechanism 300 and meshed with the second-stage planet gear 420.

The first-stage planet carrier 310 drives the second-stage sun gear 440 to rotate, and the second-stage planet gear 420 meshes between the second-stage sun gear 440 and the second-stage ring gear 430. The second-stage ring gear 430 is fixed, so that the second-stage planet gear 420 rotates under the action of the second-stage sun gear 440 and the second-stage ring gear 430, causing a left end of the second-stage planet carrier 410 to output power, that is, the half shaft is driven to rotate.

Referring to FIG. 2, a motor flange 210 is provided on the left side of the motor 200. The motor flange 210 is annular and abuts against the first surface 100a of the support arm 100. The second-stage ring gear 430 may be fixed to an inner wall of the motor flange 210, for example, by spline structure, so that the second-stage ring gear 430 is engaged with and fixed to inner wall of the motor flange 210 from the left side of the motor 200.

Referring to FIGS. 2 and 4, the second-stage sun gear 440 may be integrally or detachably connected to the first-stage right pipe 315 of the first-stage planet carrier 310. Taking the detachable connection as an example, the outer wall of the first-stage right pipe 315 may be provided with a spline groove 315a, and the second-stage sun gear 440 is engaged with the first-stage right pipe 315 from right to left by the spline groove 315a, and finally fixed by a bolt.

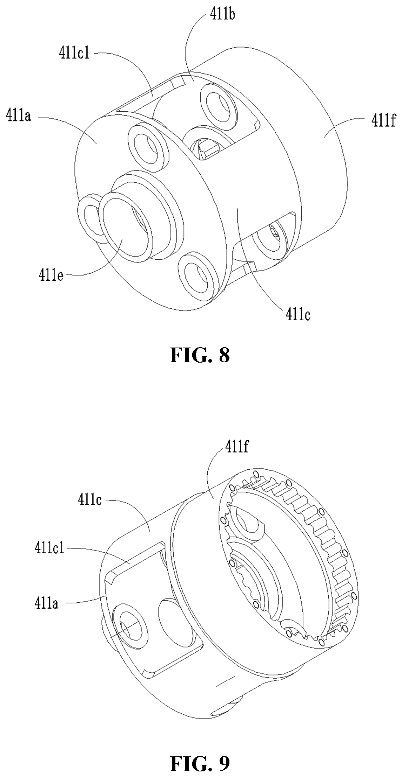

As shown in FIGS. 2, 6 to 9, the second-stage planet carrier 410 includes:
a second-stage first carrier body 411, where the second-stage planet gear 420 is rotatably arranged on the second-stage first carrier body 411; and
a second-stage second carrier body 412, a left side of which is connected to the half shaft, a right side of which is connected to the second-stage first carrier body 411, where the first-stage ring gear 330 is axially limited between the second-stage first carrier body 411 and the second-stage second carrier body 412.

As shown in FIGS. 6 to 9, the second-stage first carrier body 411 includes a second-stage left side plate 411a, a second-stage right side plate 411b, a second-stage outer side plate 411c and a second-stage connecting shaft 411d. The second-stage outer side plate 411c is connected to outer peripheral portions of the second-stage left side plate 411a and the second-stage right side plate 411b. The second-stage connecting shaft 411d is connected between the second-stage left side plate 411a and the second-stage right side plate 411b. The number of the second-stage connecting shafts 411d may also be three, and the three second-stage connecting shafts 411d are spaced apart circumferentially. One second-stage planet gear 420 is sleeved on each second-stage connecting shaft 411d, and a second-stage bearing 411g is arranged between the second-stage connecting shaft 411d and the second-stage planet gear 420. The second-stage planet gear 420 is held between the second-stage left side plate 411a and the second-stage right side plate 411b. The second-stage outer side plate 411c is provided with a second-stage opening 411c1 to expose the second-stage planet gear 420 for meshing with the second-stage ring gear 430.

Referring to FIG. 7, the second-stage connecting shaft 411d is inserted into the second-stage left side plate 411a and the second-stage right side plate 411b, and a right end face of the second-stage connecting shaft 411d is exposed on the second-stage right side plate 411b. A second-stage oil passage 411d1 may be formed in the right end face of the second-stage connecting shaft 411d, and a second-stage hole 411d2 is formed in an inner wall of the second-stage oil passage 411d1. Lubricating oil can enter the second-stage oil passage 411d1 from the right end face of the second-stage connecting shaft 411d, and then pass through the second-stage hole 411d2 to lubricate the second-stage bearing 411g between the second-stage connecting shaft 411d and the second-stage planet gear 420.

As shown in FIG. 2, FIG. 7 and FIG. 8, the second-stage first carrier body 411 further includes a second-stage right pipe 411e which is connected to an inner peripheral portion of the second-stage right side plate 411b. The second-stage right pipe 411e is inserted into a housing of the motor 200, and a second bearing 720 is arranged between the second-stage right pipe 411e and the housing of the motor 200. Moreover, the second-stage right pipe 411e is sleeved outside the reduction shaft 500, and a third bearing 730 may be arranged between the second-stage right pipe 411e and the reduction shaft 500, so as to improve the structural reliability and ensure the stability of rotation.

As shown in FIGS. 2 and 7, the second-stage first carrier body 411 further includes a second-stage left pipe 411f which is connected to the outer peripheral portion of the second-stage left side plate 411a, and the first-stage reduction mechanism 300 may be accommodated in the second-stage left pipe 411f, making the structure compact. The first-stage right pipe 315 of the first-stage planet carrier 310 passes through the inner peripheral portion of the second-stage left side plate 411a and extends into the second-stage outer side plate 411c, and the second-stage sun gear 440 is sleeved on the first-stage right pipe 315 to mesh with the second-stage planet gear 420. A fourth bearing 740 is provided between the first-stage right pipe 315 and the second-stage left side plate 411a.

As shown in FIG. 2, FIG. 6 and FIG. 7, the second-stage planet gear 420 is a double-gear system, including a second-stage first gear 421 and a second-stage second gear 422 that are integrally and axially connected. The second-stage first gear 421 meshes with the second-stage sun gear 440, and the second-stage second gear 422 meshes with the second-stage ring gear 430.

The two-stage first gear 421 and the two-stage second gear 422 are arranged from left to right, and a circumferential dimension of the two-stage first gear 421 is larger than that of the two-stage second gear 422, and each of the two-stage first gear 421 and the two-stage second gear 422 may be of a helical-tooth structure.

As shown in FIG. 2, FIG. 7 and FIG. 10, the second-stage second carrier body 412 includes a second-stage second left pipe 412a and a second-stage second disc 412b. The second-stage second left pipe 412a is connected to an inner peripheral portion of the second-stage second disc 412b, and the second-stage second disc 412b is connected to the left side of the second-stage left pipe 411f and may be fixed by a bolt or the like. The second-stage second left pipe 412a may extend from the second surface 100b of the support arm 100 or be arranged inside the arm body 100d, configured to output power and be connected to the half shaft. Referring to FIG. 2, a fifth bearing 750 may be arranged between the second-stage second left pipe 412a and the support arm 100, and the fifth bearing 750 may be a double-row tapered roller bearing.

As shown in FIGS. 2, 6 and 7, the inner wall of the second-stage left pipe 411f is provided with a second-stage step 411f2 and an engagement groove 411f1, and the engagement groove 411f1 extends from the second-stage step 411f2 to the left end face of the second-stage left pipe 411f. The right end face of the second-stage second disc 412b is provided with a second disc engagement ring 412c, and an outer diameter of the second-stage second disc 412b is larger than that of the second disc engagement ring 412c. The outer peripheral portion of the first-stage ring gear 330 is provided with a ring gear engagement ring which is engaged with the engagement groove 411f1, so that the first-stage ring gear 330 can be inserted into the second-stage left pipe 411f from the left end face of the second-stage left pipe 411f and be arranged inside the second-stage left pipe 411f. Then, the second disc engagement ring 412c is inserted into the engagement groove 411f1 until the second disc engagement ring 412c abuts against the left end face of the second-stage left pipe 411f, so that the first-stage ring gear 330 is axially limited between the second disc engagement ring 412c and the second-stage step 411f2. Therefore, the second-stage planet carrier 410 has a split structure, which is convenient for overall assembly.

As shown in FIG. 2, the first-stage reduction mechanism 300 and the second-stage reduction mechanism 400 are jointly accommodated in the arm body 100d of the support arm 100. The first-stage reduction mechanism 300 is arranged inside the second-stage reduction mechanism 400, and thus, they can be lubricated integrally. Two oil seals 810 are arranged on both axial sides of the support arm 100. One of the oil seals 810 is located between the support arm 100 and the second-stage second left pipe 412a of the second-stage second carrier body 412, and the other of the oil seals 810 is located between the reduction shaft 500 and the housing of the motor 200. The first-stage planet gear 320 and the second-stage planet gear 420 rotate to splash the lubricating oil, which integrally lubricates the first-stage reduction mechanism 300 and the second-stage reduction mechanism 400. The lubricating oil simultaneously enters the first-stage oil passage 314a and the second-stage oil passage 411d1 to lubricate the bearings.

As shown in FIG. 1 and FIG. 2, the motor 200 is an axial flux motor, which has the advantages such as small axial size, high efficiency and high power density, so the overall axial size is further reduced by using the axial flux motor.

As shown in FIGS. 1 and 3, the wheel-side driving assembly further includes a half-shaft sleeve 830, a brake disc 840, a caliper 850, etc. The half-shaft sleeve 830 is connected to the second surface 100b of the support arm 100, and the half shaft is arranged inside the half-shaft sleeve 830. The brake disc 840 and the caliper 850 are arranged at an edge of the contour of the half-shaft sleeve 830.

Bearings are respectively arranged between one of two axial ends of the second-stage planet carrier and the support arm, and between the other of the two axial ends of the second-stage planet carrier and the motor. Compared with the conventional technology where a bearing is only mounted on a wheel hub side, the rotation is more stable, and the service life is prevented from being influenced by excessive bearing loads.

### Second Embodiment

As shown in FIG. 2, the first-stage planet carrier 310 of the wheel-side driving assembly is inserted into the second-stage planet carrier 410, and the first-stage planet carrier 310 is connected to the second-stage sun gear 440.

The first-stage reduction mechanism 300 and the second-stage reduction mechanism 400 are split structures, and are assembled to form the reducer structure. The first-stage planet carrier 310 is directly inserted into the second-stage planet carrier 410 and connected to the second-stage sun gear 440, so that the structure is simple and the assembly efficiency is improved.

As shown in FIG. 2, the first-stage sun gear 340 may be integrally or detachably connected to the reduction shaft 500, and the first-stage planet carrier 310 is rotatably arranged on the outer wall of the reduction shaft 500, so that the reduction shaft 500 drives the first-stage sun gear 340 to rotate. The first-stage planet gear 320 is engaged between the first-stage sun gear 340 and the first-stage ring gear 330. Both the first-stage sun gear 340 and the first-stage ring gear 330 rotate, and the first-stage planet gear 320 is rotatably arranged on the first-stage planet carrier 310, so as to drive the first-stage planet carrier 310 to rotate, so that the first-stage planet carrier 310 outputs power through the output end on the right side.

The first-stage planet carrier 310 drives the second-stage sun gear 440 to rotate, and the second-stage planet gear 420 is meshed between the second-stage sun gear 440 and the second-stage ring gear 430. The second-stage ring gear 430 is fixed, so that the second-stage planet gear 420 rotates under the action of the second-stage sun gear 440 and the second-stage ring gear 430, allowing the left end of the second-stage planet carrier 410 to output power.

To sum up, the first-stage reduction mechanism 300 and the second-stage reduction mechanism 400 are split structures and assembled to form the reduction structure. The first-stage planet carrier 310 is directly inserted into the second-stage planet carrier 410 and connected to the second-stage sun gear 440, making the structure simple and improving the assembly efficiency.

### Third Embodiment

Referring to FIG. 2, the reduction structure according to the third embodiment is based on the first embodiment. The first-stage planet gear 320 is located at the axial side of the second-stage planet gear 420. One side of the first-stage connecting shaft 314 facing the second-stage planet gear 420 is provided with a first-stage oil passage 314a which is communicated between the first-stage planet gear 320 and the first-stage connecting shaft 314. One side of the second-stage connecting shaft 411d facing the first-stage planet gear 320 is provided with a second-stage oil passage 411d1 which is communicated between the second-stage planet gear 420 and the second-stage connecting shaft 411d.

The first-stage reduction mechanism 300 and the second-stage reduction mechanism 400 are jointly arranged inside the support arm 100, that is, the two are arranged in the same cavity. Moreover, the first-stage planet gear 320 and the second-stage planet gear 420 can jointly stir lubricating oil in the support arm 100 for integral lubrication. The first-stage planet gear 320 can throw the lubricating oil onto the second-stage planet gear 420, thereby improving the lubrication effect and ensuring the operation reliability. The lubricating oil can enter the first-stage oil passage 314a and the second-stage oil passage 411d to lubricate the bearings between the first-stage planet gear 320 and the first-stage connecting shaft 314, and between the second-stage planet gear 420 and the second-stage connecting shaft 411d, so as to further improve the lubrication effect.

As shown in FIG. 2, the first-stage reduction mechanism 300 and the second-stage reduction mechanism 400 are jointly accommodated in the arm body 100d of the support arm 100. The first-stage reduction mechanism 300 is arranged inside the second-stage reduction mechanism 400, so that they can be lubricated integrally. Two oil seals 810 are arranged on both axial sides of the support arm 100. One of the oil seals 810 is located between the support arm 100 and the second-stage second left pipe 412a of the second-stage second carrier body 412, and the other of the oil seals 810 is located between the reduction shaft 500 and the housing of the motor 200. The first-stage planet gear 320 and the second-stage planet gear 420 rotate to throw the oil, which integrally lubricates the first-stage reduction mechanism 300 and the second-stage reduction mechanism 400. The oil simultaneously enters the first-stage oil passage 314a and the second-stage oil passage 411d1 to lubricate the bearings.

Referring to FIG. 2, the working principle of the reduction structure is as follows.

The motor 200 drives the reduction shaft 500 to rotate, and the reduction shaft 500 drives the first-stage sun gear 340 to rotate. The first-stage planet gear 320 is meshed between the first-stage sun gear 340 and the first-stage ring gear 330, both the first-stage sun gear 340 and the first-stage ring gear 330 rotates, and the first-stage planet gear 320 is rotatably arranged on the first-stage planet carrier 310. Therefore, the first-stage planet carrier 310 rotates under the action of the first-stage sun gear 340 and the first-stage ring gear 330.

The first-stage planet carrier 310 drives the second-stage sun gear 440 to rotate. The second-stage planet gear 420 is engaged between the second-stage sun gear 440 and the second-stage ring gear 430, and the second-stage ring gear 430 is fixed. Therefore, the second-stage planet gear 420 rotates under the action of the second-stage sun gear 440 and the second-stage ring gear 430, allowing the left end of the second-stage planet carrier 410 to drive the half shaft to rotate.

### Fourth Embodiment

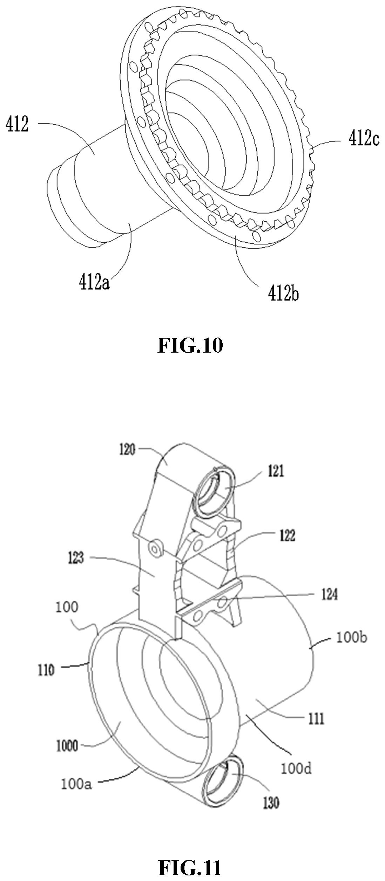

As shown in FIG. 11 and FIG. 12, the reduction structure according to the fourth embodiment is based on the first embodiment. The support arm 100 further includes a mounting seat 110. The mounting seat 110 includes:
a first housing 111; and
a second housing 112, one side of which is connected to the first housing 111, and the other side of which is configured for connecting a driving device 200, where a circumferential dimension of the second housing 112 is greater than that of the first housing 111;
where an interior of the first housing 111 communicates with an interior of the second housing 112 to form a stepped hole 1000 which is configured for accommodating the first-stage reduction mechanism 300 and the second-stage reduction mechanism 400.

The mounting seat 110 is composed of the first housing 111 and the second housing 112 with different circumferential dimensions, and the stepped hole 1000 is formed inside the first housing 111 and the second housing 112, so that the first-stage reduction mechanism 300 and the second-stage reduction mechanism 400 are accommodated in the stepped hole 1000, thereby reducing the axial size and the occupied space. Moreover, the first-stage reduction mechanism 300 and the second-stage reduction mechanism 400 can be rationally arranged by using the stepped hole 1000, for example, the second-stage reduction mechanism 400 with a larger circumferential size is accommodated inside the second housing 112, and the first-stage reduction mechanism 300 with a smaller circumferential size is accommodated inside the first housing 111, as shown in FIG. 3.

As shown in FIGS. 2 and 12, the stepped hole 1000 includes:
a first hole 1001, which axially penetrates the first housing 111; and
a second hole 1002, which axially penetrates the second housing 112, where a diameter of the second hole 1002 is greater than that of the first hole 1001, and the second hole 1002 is communicated with the first hole 1001.

The first hole 1001 is formed by the inner wall of the first housing 111. Since the first hole 1001 axially penetrates through the first housing 111, the first hole 1001 is communicated with the second hole 1102 on the right side of the first housing 111. The second-stage planet carrier 410 of the second-stage reduction mechanism 400 passes through the first hole 1001 and is connected to the half shaft.

Similarly, the second hole 1002 is formed by the inner wall of the second housing 112. Since the second hole 1002 axially penetrates through the second housing 112, the second hole 1002 is communicated with the first hole 1001 on the left side of the second housing 111, and the right side of the second housing 112 is connected to the motor 200.

As shown in FIGS. 2 and 12, the first hole 1001 includes:
a first outer hole 1001a; and
a first inner hole 1001b, which is communicated between the first outer hole 1001a and the second hole 1002, where a diameter of the first inner hole 1001b is greater than that of the first outer hole 1001a, a bearing is accommodated in the first outer hole 1001a, and the first-stage reduction mechanism 300 is arranged in the first inner hole 1001b.

The first hole 1001 is also a stepped hole, the bearing is accommodated in the first outer hole 1001a with a smaller diameter and is located between the second-stage planet carrier 410 of the second-stage reduction mechanism 400 and the inner wall of the first outer hole 1001a, and the first-stage reduction mechanism 300 is accommodated in the first inner hole 1001b with a larger diameter.

As shown in FIGS. 11 and 12, the mounting seat 110 further includes: an intermediate housing 113 connected between the first housing 111 and the second housing 112. A circumferential dimension of the intermediate housing 113 gradually increases along the direction from the first housing 111 to the second housing 112.

The stepped hole 1000 further includes a middle hole 1003 surrounded by the intermediate housing 113. The middle hole 1003 communicates between the first hole 1001 and the second hole 1002, and the diameter of the middle hole 1003 gradually increases along the direction from the first hole 1001 to the second hole 1002.

As shown in FIG. 12, axial dimensions of the first housing 111, the second housing 112 and the intermediate housing 113 gradually decrease, which may also be adjusted according to design requirements.

As shown in FIGS. 11 and 12, the support arm 100 further includes an upper arm 120 and a lower arm 130 which are connected to an outer wall of the mounting seat 110. The upper arm 120 is located above the mounting seat 110 and the lower arm 130 is located below the lower arm 130, for connecting a shock absorber, an air spring, a bracket, and so on, which may be referenced to an independent suspension for a wheel-side motor-driven bus disclosed in CN109435612A.

Referring to FIGS. 11 and 12, the upper arm 120 includes an upper sleeve 121, a first upper connecting plate 122 and a second upper connecting plate 123. The first upper connecting plate 122 is connected between the first housing 111 and the upper sleeve 121, and the second upper connecting plate 123 is connected between the second housing 112 and the upper sleeve 121, and the upper sleeve 121 is perpendicular to the mounting seat 110.

An upper central hole 121a of the upper sleeve 121 is configured for connecting the upper arm, and a central axis of the upper central hole 121a is perpendicular to a central axis of the mounting seat 110. A plurality of upper intermediate plates 124 are connected between the first upper connecting plate 122 and the second upper connecting plate 123, and a weight-reducing hole is provided between adjacent upper intermediate plates 124 to reduce the weight of the upper arm 120.

As shown in FIGS. 11 and 12, the lower arm 130 includes a lower sleeve 131 and a lower connecting plate 132. The lower sleeve 131 is connected to the outer wall of the intermediate housing 113 of the mounting seat 110, and the lower connecting plate 132 is connected between the lower sleeve 131 and the first housing 111, and the lower sleeve 131 is perpendicular to the mounting seat 110.

A lower central hole 131a of the lower sleeve 131 is configured for connecting the lower arm, and a central axis of the lower central hole 131a is perpendicular to the central axis of the mounting seat 110.

To sum up, the mounting seat 110 is composed of the first housing 111 and the second housing 112 with different circumferential dimensions, and the stepped hole 1000 is formed inside the first housing 111 and the second housing 112, so that the first-stage reduction mechanism 300 and the second-stage reduction mechanism 400 can be accommodated in the stepped hole 1000, thereby reducing the axial size and the occupied space. Furthermore, the first-stage reduction mechanism 300 and the second-stage reduction mechanism 400 can be rationally arranged by using the stepped hole 1000, for example, the second-stage reduction mechanism 400 with a larger circumferential size is accommodated in the second housing 112, and the first-stage reduction mechanism 300 with a smaller circumferential size is accommodated in the first housing 111.

### Fifth Embodiment

As shown in FIG. 2, FIG. 5 and FIG. 7, a method for assembling a wheel-side driving assembly includes the following steps S100 to S300.

In step S100, a support arm 100 is provided. The support arm 100 has a first surface 100a and a second surface 100b which are opposite to each other, and an arm body 100d connected between the first surface 100a and the second surface 100b.

In step S200, the second-stage reduction mechanism 400 is connected between the first-stage reduction mechanism 300 and the motor 200.

In step S300, the first-stage reduction mechanism 300 and the second-stage reduction mechanism 400 are inserted into the arm body 100d from the first surface 100a of the support arm 100, and the motor 200 is connected to the first surface 100a. The second-stage reduction mechanism 400 outputs power through a second-stage planet carrier 410.

A motor shaft of the motor 200 is connected to a reduction shaft 500. The second-stage planet carrier 410 of the second-stage reduction mechanism 400 includes a second-stage first carrier body 411 and a second-stage second carrier body 412 which are connected. Further, the step S200 includes the following steps S210 to S230.

In step S210, the second-stage ring gear 430 is inserted into and fixed to the inner wall of the motor flange 210 of the motor 200 from the left side of the motor 200; the second-stage first carrier body 411, on which the second-stage planet gear 420 is rotatably arranged, is sleeved on the reduction shaft 500 from the left side of the reduction shaft 500; the second-stage planet gear 420, which is rotatable on the second-stage first carrier body 411, is meshed with the second-stage ring gear 430; and the second-stage right pipe 411e of the second-stage first carrier body 411 is rotatably connected to the motor 200.

In step S220, the first-stage planet carrier 310, on which the first-stage planet gear 320 is rotatably arranged, is sleeved on the reduction shaft 500 from the left side of the reduction shaft 500 and accommodated in the second-stage left pipe 411f of the second-stage first carrier body 411, until the first-stage right pipe 315 passes through the inner peripheral portion of the second-stage left side plate 411a and extends into the second-stage outer side plate 411c to be connected to the second-stage sun gear 440, so that the second-stage sun gear 440 sleeved on the first-stage right pipe 315 meshes with the second-stage planet gear 420.

In step S230, the first-stage ring gear 330 is fixed to the inner wall of the second-stage left pipe 411f, and the first-stage ring gear 330 is meshed with the first-stage planet gear 320; then, the second-stage second carrier body 412 is connected to the left side of the first-stage planet carrier 310, so that the second-stage first carrier body 411 and the second-stage second carrier body 412 are connected to form the second-stage planet carrier 410.

The motor 200, the second-stage reduction mechanism 400 and the first-stage reduction mechanism 300 are arranged from right to left, and the second-stage reduction mechanism 400 and the first-stage reduction mechanism 300 can be assembled as a whole, thus effectively improving the assembly efficiency.

In the step S300, the first-stage reduction mechanism 300 and the second-stage reduction mechanism 400 are inserted into the arm body 100d from the first surface 100a of the support arm 100, until the second-stage second left pipe 412a of the second-stage second carrier body 412 is located at the second surface 100b of the support arm 100, serving as a power output to connect the half shaft. Finally, the motor 200 is fixedly connected to the first surface 100a of the support arm 100 by a bolt or the like.

Referring to FIG. 2, the working principle of the wheel-side driving assembly is as follows.

The motor 200 drives the reduction shaft 500 to rotate, and the reduction shaft 500 drives the first-stage sun gear 340 to rotate. The first-stage planet gear 320 is meshed between the first-stage sun gear 340 and the first-stage ring gear 330, both the first-stage sun gear 340 and the first-stage ring gear 330 rotate, and the first-stage planet gear 320 is rotatably arranged on the first-stage planet carrier 310. Therefore, the first-stage planet carrier 310 rotates under the action of the first-stage sun gear 340 and the first-stage ring gear 330.

The first-stage planet carrier 310 drives the second-stage sun gear 440 to rotate. The second-stage planet gear 420 is engaged between the second-stage sun gear 440 and the second-stage ring gear 430, and the second-stage ring gear 430 is fixed. Therefore, the second-stage planet gear 420 rotates under the action of the second-stage sun gear 440 and the second-stage ring gear 430, so that the left end of the second-stage planet carrier 410 outputs power at the second surface 100b of the support arm 100.

In summary, by arranging the first-stage reduction mechanism 300 and the second-stage reduction mechanism 400 inside the arm body 100d of the support arm 100, the structure is compact and the overall axial dimension is reduced. Moreover, the first-stage reduction mechanism 300, the second-stage reduction mechanism 400 and the motor 200 are arranged axially based on their respective circumferential sizes, the first-stage reduction mechanism 300 with a smaller circumferential size is arranged on the outer side, and the second-stage reduction mechanism 400 with a larger circumferential size is arranged between the motor 200 and the first-stage reduction mechanism 300, so as to prevent the circumferential size from increasing and avoid interference with the airbag 600 and the like arranged on a circumferential side of the support arm 100, so that the arrangement is novel, the space is fully utilized, and the space occupied is further reduced.

The above embodiments are only used to illustrate the technical ideas and characteristics of the present application, and their purpose is to enable those skilled in the art to understand the content of the present application and implement it accordingly. The scope of the present application should not be limited to these embodiments alone, that is, all equivalent changes or modifications made according to the spirit disclosed in the present application still fall within the patent scope of the present application.

## Claims

1. A wheel-side driving assembly, **characterized by** comprising:
a support arm (100) having a first surface (100a) and a second surface (100b) opposite to each other, and an arm body (100d) connected between the first surface (100a) and the second surface (100b);
a motor (200) connected to the first surface (100a) of the support arm (100);
a first-stage reduction mechanism (300) located inside the arm body (100d); and
a second-stage reduction mechanism (400) located inside the arm body (100d)(100c), wherein the motor (200), the first-stage reduction mechanism (300) and the second-stage reduction mechanism (400) are sequentially connected in a transmission manner, the second-stage reduction mechanism (400) is located between the first-stage reduction mechanism (300) and the motor (200), and the second-stage reduction mechanism (400) outputs power through a second-stage planet carrier (410).

2. The wheel-side driving assembly according to claim 1, wherein the first-stage reduction mechanism (300) comprises:
a first-stage sun gear (340) connected to the motor (200);
a first-stage planet carrier (310) sleeved outside the first-stage sun gear (340), wherein a right side of the first-stage planet carrier (310) is connected to a second-stage sun gear (440) of the second-stage reduction mechanism (400);
a first-stage planet gear (320) rotatably arranged on the first-stage planet carrier (310) and meshed with the first-stage sun gear (340); and
a first-stage ring gear (330) arranged around an outer periphery of the first-stage planet carrier (310) and meshed with the first-stage planet gear (320).

3. The wheel-side driving assembly according to claim 2, wherein the first-stage planet carrier (310) comprises:
a first-stage left side plate (311);
a first-stage right side plate (312), wherein the first-stage planet gear (320) is rotatably arranged between the first-stage right side plate (312) and the first-stage left side plate (311);
a first-stage right pipe (315) connected to an inner peripheral portion of the first-stage right side plate (312), wherein the second-stage sun gear (440) of the second-stage reduction mechanism (400) is arranged on the first-stage right pipe (315) and is meshed with the second-stage planet gear (420); and
a first-stage left pipe (317) connected to an inner peripheral portion of the first-stage left side plate (311), wherein a bearing is arranged between the first-stage left pipe (317) and a second-stage second carrier body (412) of the second-stage planet carrier (410), and a bearing is arranged between the first-stage right pipe (315) and a second-stage left side plate (411a).

4. The wheel-side driving assembly according to claim 2, wherein the second-stage reduction mechanism (400) comprises:
a second-stage planet carrier (410), one end of which is connected to a half shaft, and the other end of which is rotatably connected to the motor (200);
a second-stage planet gear (420) rotatably arranged on the second-stage planet carrier (410);
a second-stage ring gear (430), which is arranged around an outer periphery of the second-stage planet carrier (410) and fixed to an inner wall of the arm body (100d), and meshed with the second-stage planet gear (420); and
the second-stage sun gear (440) meshed with the second-stage planet gear (420).

5. The wheel-side driving assembly according to claim 4, wherein the second-stage planet gear (420) comprises a second-stage first gear (421) and a second-stage second gear (422) that are axially and integrally connected, the second-stage first gear (421) is meshed with the second-stage sun gear (440), the second-stage second gear (422) is meshed with the second-stage ring gear (430), and a diameter of the second-stage first gear (421) is greater than a diameter of the first gear (421).

6. The wheel-side driving assembly according to claim 4, wherein the second-stage planet carrier (410) comprises:
a second-stage first carrier body (411), wherein the second-stage planet gear (420) is rotatably arranged on the second-stage first carrier body (411); and
a second-stage second carrier body (412), a left side of which is connected to the half shaft, and a right side of which is connected to the second-stage first carrier body (411), wherein the first-stage ring gear (330) is axially confined between the second-stage first carrier body (411) and the second-stage second carrier body (412).

7. The wheel-side driving assembly according to claim 6, wherein the second-stage first carrier body (411) comprises:
a second-stage left side plate (411a);
a second-stage right side plate (411b), wherein the second-stage planet gear (420) is rotatably arranged between the second-stage right side plate (411b) and the second-stage left side plate (411a); and
a second-stage right pipe (411e) connected to an inner peripheral portion of the second-stage right side plate (411b), wherein a bearing is arranged between the second-stage right pipe (411e) and the motor (200); and
a second-stage left pipe (411f) connected to an outer peripheral portion of the second-stage left side plate (411a), wherein the first-stage reduction mechanism (300) is located in the second-stage left pipe (411f).

8. The wheel-side driving assembly according to claim 6, wherein the second-stage second carrier body (412) comprises:
a second-stage second left pipe (412a), wherein a bearing is arranged between the second-stage second left pipe (412a) and the support arm (100); and
a second-stage second disc (412b) connected to the second-stage second left pipe (412a), wherein the first-stage ring gear (330) is axially confined between the second-stage second disc (412b) and the second-stage left pipe (411f).

9. The wheel-side driving assembly according to claim 4, wherein
the first-stage planet gear (320) is arranged on the first-stage planet carrier (310) through a first-stage gear shaft (314), and the second-stage planet gear (420) is arranged on the second-stage planet carrier (410) through a second-stage gear shaft (411d); and
the first-stage planet gear (320) is located on an axial side of the second-stage planet gear (420), one side of the first-stage gear shaft (314) facing the second-stage planet gear (420) is provided with a first-stage oil passage (314a) which is communicated between the first-stage planet gear (320) and the first-stage gear shaft (314), and one side of the second-stage gear shaft (411d) facing the first-stage planet gear (320) is provided with a second-stage oil passage (411d1) which is communicated between the second-stage planet gear (420) and the second-stage gear shaft (411d).

10. The wheel-side driving assembly according to claim 4, further comprising:
a reduction shaft (500) connected to the motor (200), wherein the reduction shaft (500) passes through the first-stage planet carrier (310) and the second-stage planet carrier (410) in sequence, the first-stage planet carrier (310) and the second-stage planet carrier (410) are rotatably connected to the reduction shaft (500), and the first-stage sun gear (340) is connected to an outer wall of the reduction shaft (500).

11. The wheel-side driving assembly according to claim 4, wherein the second-stage planet gear (420) comprises a second-stage first gear (421) and a second-stage second gear (422) that are axially and integrally connected, and the second-stage first gear (421) is meshed with the second-stage sun gear (440), and the second-stage second gear (422) is meshed with the second-stage ring gear (430).

12. The wheel-side driving assembly according to claim 1, wherein the support arm (100) comprises a mounting seat (110) which comprises:
a first housing (111);
a second housing (112), one side of which is connected to the first housing (111), and the other side of which is configured for connecting a driving device (200), wherein a circumferential dimension of the second housing (112) is greater than a circumferential dimension of the first housing (111);
wherein an interior of the first housing (111) and an interior of the second housing (112) are communicated and form a stepped hole (1000) which is configured for accommodating a reduction assembly (900); and
wherein the first-stage reduction mechanism (300) is arranged inside the first housing (111), and the second-stage reduction mechanism (400) is arranged inside the second housing (112).

13. A method for assembling a wheel-side driving assembly, comprising:
providing a support arm (100) which has a first surface (100a) and a second surface (100b) opposite to each other, and an arm body (100d) connected between the first surface (100a) and the second surface (100b);
connecting a second-stage reduction mechanism (400) between a first-stage reduction mechanism (300) and a motor (200); and
inserting the first-stage reduction mechanism (300) and the second-stage reduction mechanism (400) into the arm body (100d) from the first surface (100a) of the support arm (100), and connecting the motor (200) to the first surface (100a), wherein the second-stage reduction mechanism (400) outputs power through a second-stage planet carrier (410).
